Europäisches Patentamt

European Patent Office

Office européen des brevets

(19)

(11) Publication number: **0 107 372**
**A2**

# EUROPEAN PATENT APPLICATION

(12)

(21) Application number: 83305755.7

(22) Date of filing: 27.09.83

(51) Int. Cl.³: **G 01 N 1/18**

(30) Priority: 14.10.82 US 434378
19.01.83 US 459045

(43) Date of publication of application: 02.05.84
Bulletin 84/18

(84) Designated Contracting States: **BE CH DE FR GB IT LI
NL SE**

(71) Applicant: **COULTER ELECTRONICS INC, 590 W. 20th
Street, Hialeah Florida 33010 (US)**

(72) Inventor: **Drury, F. Robert, 9 Bates Road, Lexington,
MA 02173 (US)**

(74) Representative: **Crawford, Andrew Birkby et al, A.A.
THORNTON & CO. Northumberland House 303-306 High
Holborn, London WC1V 7LE (GB)**

(54) Slide preparation apparatus.

(57) A portable, manually operable device for preparing a monolayer film of a biological fluid sample or the like on a slide for microscopic examination. Said device includes a base (12, 112) for retaining the slide (14) on a support surface (18) thereof and a spreader (16, 116) manually movable linearly relative to the base and slide in a pass which spreads a sample of the fluid on the slide into such a monolayer without engagement of the spreader (16, 116) with the surface (18, 118). Preferably, the spreader is constructed to be disposable.

## SLIDE PREPARATION APPARATUS

This invention generally relates to apparatus for the preparation of a fluid sample upon a slide for microscopic analysis, and more particularly, to improved apparatus for supporting the slide and spreading the sample thereon.

Prior art devices such as those described in United States Patent 4,359,013 have employed a base on which a slide to be stained is supported flat on a support surface thereof. A spreader is manually movable linearly relative to the base and engaging the surface of the slide with appreciable downward force so that the fluid sample can be spread over the slide to form a so-called "monolayer" of the sample. The spreader is intended to be disposable after each use thereof. Typically, a blood sample is spread into a monocellular layer on the slide which can then be microscopically examined for blood cell differential screening.

Several deficiencies exist in such prior art devices. As structured, the spreader frictionally engaged said support surface so that it formed grooves or ruts in the support surface of the base after multitudinous passes. Eventually, irregularities in the path of the movement of the spreader relative to the slide actually interfered with uniformity of spreading of the sample and thereby prevented achieving the desired monocellular layer consistently with the same base which was not intended to be disposable. Also, the base tended to deform or flex downwardly because of the necessity to press downwardly on the spreader when making the monolayer. This deformation or flexing contributed to breakage of the slides on occassion as well as possible non-uniformity in monolayer spread of the sample on the slide.

The invention herein overcomes these and other disadvantages to provide repeatable accuracy in spreading a monolayer of the samples on the slides.

According to a first aspect thereof, the invention as claimed provides:

Apparatus ·for preparing a monolayer film of a biological fluid sample, such as blood or the like, on a slide for microscopic analysis, including a base for supporting the slide and a spreading device for spreading the sample upon slide, characterized by:

    A.  a base having opposite extremities and a flat upper surface between said extremities for supporting a slide thereon and a pair of upstanding guide rails extending along opposite side edges of the surface;

    B.  a sample spreader for linear movement between said extremities relative to and engaged with the slide for spreading the sample into a monolayer on the slide comprising:

        i.  a generally planar platform having opposing first and second ends;

        ii.  one or more support members for supporting said first platform end above said slide without engagement of the support members with said surface;

        iii.  a sample spreading blade member depending from the platform adjacent said second end; and

   C. said spreader being constructed and
      arranged to be positioned for such movement between the guide rails with said
      blade member riding on the slide so that
      when a sample has been deposited on the
      ·slide resting on said surface, said
      spreader is movable linearly to enable
      the blade member to form said monolayer
      during such linear movement of the
      spreader between said extremities without
      engaging said surface.

According to a second aspect thereof, the invention
as claimed provides that the guide rails include elongated
bearing formations arranged to support the sample spreader
thereon during the linear movement of the spreader between the
guide rails.

According to a third aspect thereof, the invention as
claimed provides a spreader including a pair of spaced apart
leg members depending from the platform adjacent the first end,
so that both the leg members and the blade member ride on the
slide during the linear movement of the spreader.

The disadvantages of prior art sample spreading
devices are overcome by providing that the spreader is dimensioned to be positioned between the guide rails which maintain
the alignment of the spreader upon the slide during its linear
movement. The guide rails eliminate any need for engagement of
the spreader with the support surface of the base so that no
grooving is produced therein.

Further, the base is provided with rigidifying means
which prevent flexing or deformation of the support surface by
the downward pressure exerted upon the spreader during its linear
movement over the slide. In addition, the spreader can be provided with pins or trunnions which project from the sides of the spreader and are supported on bearing formations on the guide rails. The elevation of the bearing formations and the pins is coordinated with the thickness of the slide to assure that the blade member engages the slide to form the monolayer film when the spreader is moved linearly supported by pins. The supporting pins and the bearing formations in the guide rails can prevent interruption or discontinuity in the sample smear which can occur when a spreader having legs which ride on the slide arrives at the abrupt line of transition between the smooth glass and a frosted end area of the slide conventionally provided to accept written identification.

BRIEF DESCRIPTION OF THE DRAWING

FIG. 1 is an exploded, perspective view of a slide preparation device embodying this invention;

FIG. 2 is a side elevational view of said apparatus assembled for operation with portions broken away to show details and illustrating diagrammatically, in part, three positions of the spreader riding in the preparation of the monolayer film thereon;

FIG. 3 is a sectional view taken along lines 3-3 of FIG. 2 and in the direction indicated generally;

FIG. 4 is a fragmentary view taken on FIG. 2 and enlarged to illustrate a broken outline position of the spreader at the right side end of FIG. 2 and with a fluid sample located for being spread when the spreader is moved to the left in FIG. 2;

FIG. 5 is a perspective view of said apparatus illustrating initial deposit of the fluid sample upon the slide;

FIG. 6 is a perspective view illustrating the position of the spreader after the monolayer film has been formed on the slide.

FIG. 7 is an exploded, perspective view of a second slide preparation device embodying this invention;

FIG. 8 is a side elevational view of said apparatus assembled for operation with portions broken away to show details and illustrating diagrammatically, in part, three positions of the spreader riding on the slide in the preparation of the monolayer film thereon;

FIG. 9 is a sectional view taken along lines 9-9 of FIG. 8 and in the direction indicated generally;

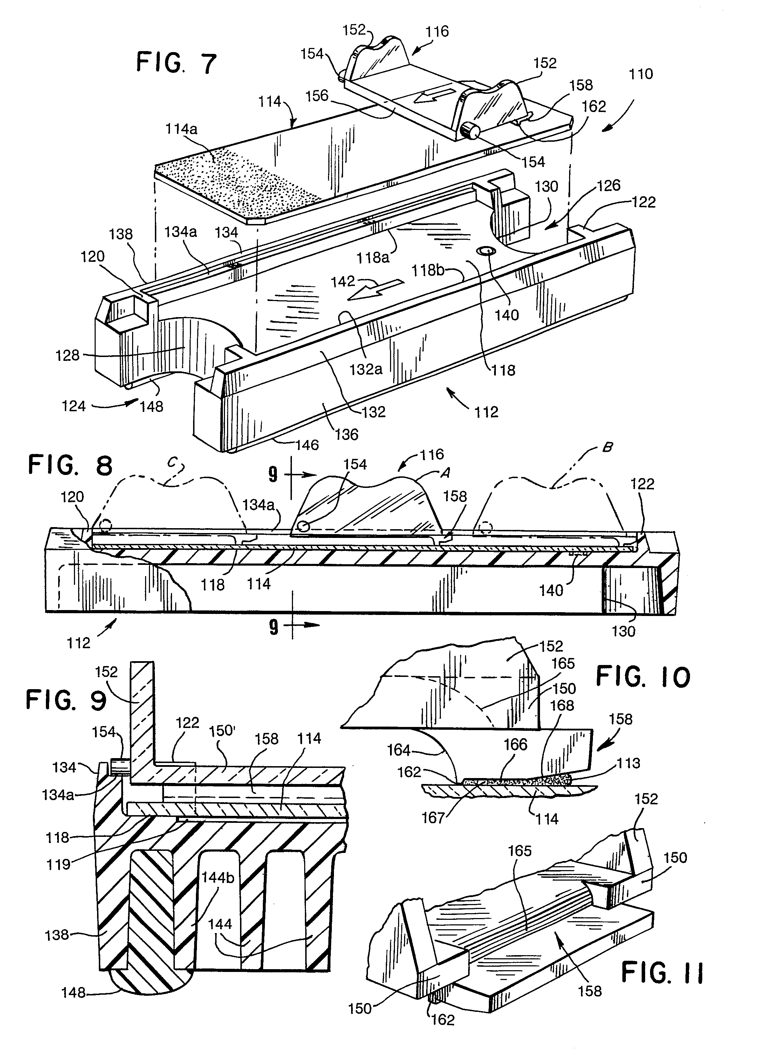

FIG. 10 is a fragmentary view taken on FIG. 8 and enlarged to illustrate a broken outline position of the spreader

0107372

at the right side end of FIG. 8 and with a fluid sample located for being spread when the spreader is moved to the left in FIG. 8;

FIG. 11 is a fragmentary, perspective view of the blade end of the spreader of Figure 10.

## DESCRIPTION OF THE PREFERRED EMBODIMENTS

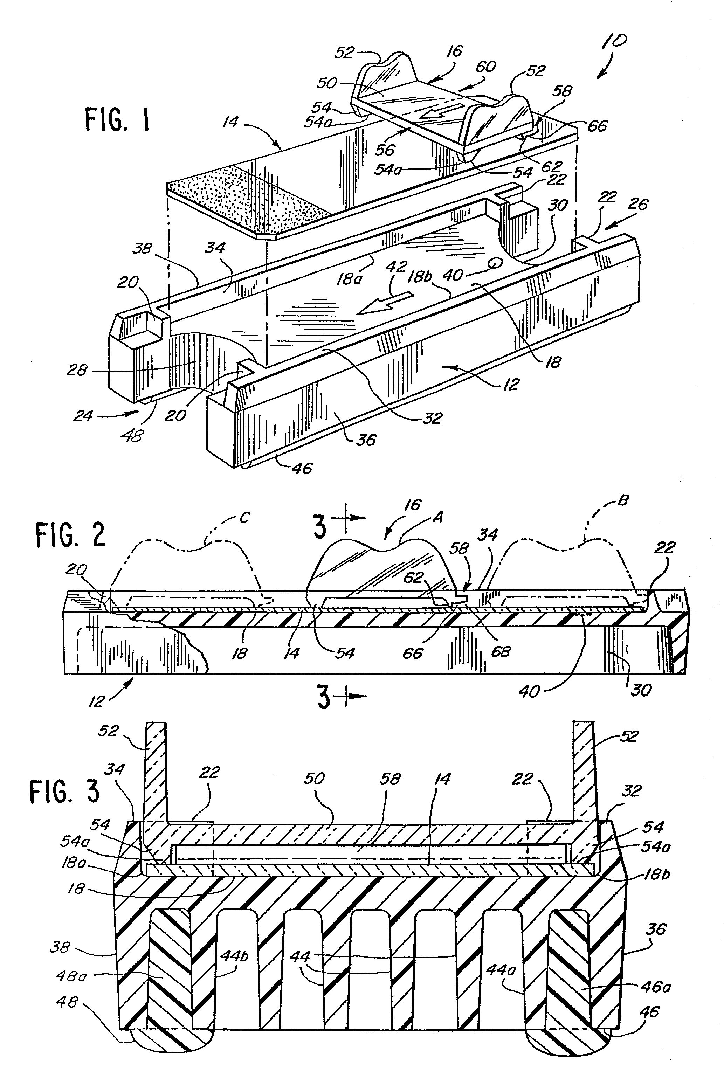

Referring to Figure 1, a slide preparation device embodying the invention is designated generally by reference character 10. Apparatus 10 includes a base 12 for supporting a typical laboratory slide 14 upon which a monolayer film of biological fluid is to be formed for microscopic analysis. One specialized use of apparatus 10 contemplates a sample of blood 13 being spread manually upon slide 14 by a spreader 16 in a linear movement so as to distribute the blood in a monolayer or monocellular film upon the slide 14, as more fully described hereinafter.

Base 12 is fabricated preferably from a rigid and tough, but easily molded material, for example acrylonitrile-butadiene-styrene resin (ABS). The resin may contain a self-lubricating component, for example, approximately 10 weight percent polytetrafluoroethlene, in order to prevent frictional wear on the rails of the base 12 by the movement of the spreader 16 as described hereinafter. Base 12 is a generally rectangular structure having a horizontal, upper surface 18 which forms a bed upon which slide 14 is supported. The slide is placed between a pair of positioning posts 20 and 22 located adjacent respective ends 24 and 26 of the base 12. Each end 24 and 26 is provided with a respective inwardly facing indentation 28 and 30 between a respective pair of positioning posts 20 and 22 so as to provide clearance space for gripping the slide 14 to facilitate its placement on and removal from surface 18.

Base 12 has a pair of elongate side rails 32 and 34 which are integral with and upstanding from respective edges 18a and 18b of surface 18 positioned above respective opposing sides 36 and 38 of the base 12. Each side rail 32 and 34 extends generally the entire length of the base.

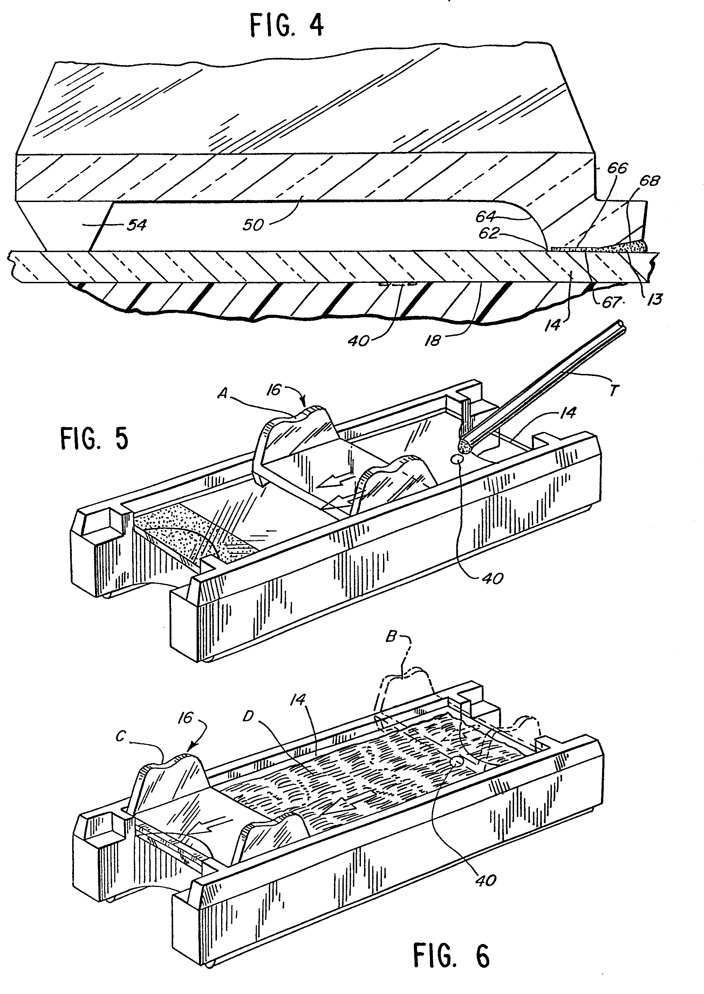

Referring to Figure 1, surface 18 is provided preferably with an indicator 40 located generally equidistant between rails 32 and 34 and adjacent one of the indentations 30. The indicator 40 designates the location for deposit thereon of the blood sample 13 upon the slide 14, as illustrated in Figure 5. Surface 18 also can be provided with a directional arrow 42.

As illustrated in Figure 3, base 12 is provided with rigidifying means for the surface 18. Illustrative of such means is a plurality of elongate rib members 44 depending from surface 18. Ribs 44 are spaced apart and are parallel along the length of and between the ends 24 and 26 of the base 12. Preferably, ribs 44 extend the entire length of base 12 in order to assure rigidity sufficient to prevent flexing or deformation of surface 18 when substantial downward force is exerted manually on the spreader 16 during smear preparation. Such rigidity of the base is desired in order to provide proper support of the slide 14 which will prevent its breaking or cracking experienced with previous slide bases lacking such structural rigidifying means. While sufficient rigidity of the base could be provided by molding the region below surface 18 in solid or with a single, wide rib, the multiple rib structure substantially reduces the resin consumption and cooling time of the molding cycle.

Additionally, base 12 can be provided with a pair of feet members 46 and 48 located generally below respective sides 36 and 38. As illustrated in Figure 1, feet 46 and 48 preferably extend the entire length of base 12. Feet 46 and 48 function to maintain base 12 stationary on the work surface (not shown) during the slide preparation. Preferably, feet 46 and 48 are fabricated from a somewhat resilient material, for example a silicone elastomer, which will resist displacement of the base 12 during the spreader movement. As illustrated in Figure 3,

0107372

feet 46 and 48 have a "T" configuration including a respective tongue formation 46a and 48a engaged between a respective side 36 and adjacent rib 44a, and side 38 and adjacent rib 44b.

Spreader 16 preferably is fabricated by injection molding, for example, from crystal grade polystyrene which enables the spreader to be inexpensive and transparent. As best illustrated in Figures 1, 3 and 4, spreader 16 includes a horizontal, planar platform 50 of generally rectangular configuration. The spreader has a pair of gripping members 52 upstanding from opposing sides of platform 50. A pair of leg members 54 depend from the opposite sides adjacent the front end 56 of the platform 50. The bottom end 54a of each leg 54 is tapered to reduce the area frictional engagement with slide 14 for supporting said front end 56 on slide 14, as best shown in Figure 3. Spreader 16 has a blade member 58 which depends from the platform 50 adjacent to the rear end 60. Blade 58 extends parallel to said rear end 60 and includes a narrow, flat edge 62 forming the bottom edge of the blade 58 which engages the slide 14. In the preparation of a smear, the legs 54 and blade 58 ride entirely on the slide 14, as best shown in Figures 2 and 4. Accordingly, the entire linear movement of spreader 16 across the slide 14 does not produce grooving in the support surface 18 of base 12.

Blade 58 includes an arcuate formation 64 which joins the bottom edge 62 and the platform 50. Blade 58 is provided with a planar, recessed surface 66 which extends generally parallel to the platform 50 from the bottom edge 62 in the direction generally opposite to the front end 56. The recessed surface 66 provides a clearance space 67 between the blade member 58 and the slide 14 for the formation of a thin film or monolayer of the sample fluid as described hereinafter. The

0107372

recessed surface 66 intersects a rearwardly inclined surface 68 which forms an angle of approximately 15° above the horizontal recessed surface 66.

Referring to Figs. 2 and 5. To use apparatus 10, a clean slide 14 first is placed on the bed surface 18 of the base 12 between the four positioning posts 20 and 22 so that the unfrosted end of the slide is positioned over the indicator 40. A spreader 16 is placed onto the center of the slide between the guide rails 32, 34 so that blade 58 faces, but is spaced from, the indicator 40, as illustrated in the middle position A of the spreader 16 in Figure 2. A blood sample 13 of approximately 5 to 6 microliters is then deposited on the slide over the indicator 40 using a capillary tube T, as illustrated in Figure 5. The spreader 16 is moved manually through the blood deposit with a substantial downward force on handles 52 until the blade 58 of the spreader engages the stop posts 22, as illustrated at the phantom position B of the spreader 16 in Figure 2. This downward force enables the blade 58 to displace all of the cells from the original location of the sample deposit; also, this initial motion initiates lateral distribution of the blood along the blade 58.

During a brief pause when the spreader 16 is engaged with the post 22, capillary action will spread the blood 13 laterally along the blade 58 so that the clearance space 67 between the slide 14 and the recessed surface 66 of the blade will become substantially filled, as best illustrated in Figure 4. Thereafter, the spreader 16 is moved forward on the slide in the direction indicated by arrow 42 until it engages the posts 20 in the phantom position C illustrated in Figure 2. The tapered legs 54 contribute to a smooth movement of the spreader 16 as the legs 54 ride on the slide 14 and the thin, monocellular layer of blood D illustrated in Figure 6 is produced as an even trail behind the blade 58 in conformity with a preferred 0.0026 inch dimension of the clearance space 67. The rails 32 and 34 of the base 12 maintain the lateral alignment of the spreader 16 and the slide 14 in both the initial backward movement and the forward movement of the spreader on the slide 14. The bed surface 18 of the base is not subjected to the concentrated downward pressure imposed by the legs 54 because they engage only the slide 14 and thereby prevent grooving or deformation thereat.

Referring to Figure 7, a second embodiment of a slide preparation device according to the invention is designated generally by reference character 110. Apparatus 110 includes a base 112 for supporting the typical laboratory slide 114 upon which a monolayer film of biological fluid is to be formed for microscopic analysis.

Base 112 is similar to base 12 illustrated in Figure 1 and can be similarly molded for example from ABS resin. The resin preferably contains a self-lubricating component as previously described, in order to prevent frictional wear on the rails of the base 112 by the movement of the spreader 116 thereon as described hereinafter. Base 112 is a generally rectangular structure having a horizontal, upper surface 118 which forms a bed upon which slide 114 is supported. The slide is placed between a pair of positioning posts 120 and 122 located adjacent respective ends 124 and 126 of the base 112. Each end 124 and 126 is provided with a respective inwardly facing indentation 128 and 130 between a respective pair of positioning posts 120 and 122 so as to provide clearance space for gripping the slide 114 to facilitate its placement on and removal from surface 118.

Base 112 has a pair of elongate side rails 132 and 134 which are integral with and upstanding from respective edges 118a and 118b of surface 118 positioned above respective opposing sides 136 and 138 of the base 112. Each side rail 132 and 134 extends generally the entire length of the base.

Each rail 132 and 134 has a respective shoulder 132a and 134a formed in the rail in opposed relationship so as to provide an elongated ramp or bearing formation spaced above the bed 118 and in parallel planar relationship therewith on which spreader 116 is supported during its linear movement required to form the monolayer film on a slide 114. Alternatively, the elongated ramp or bearing formation can be provided in slot formations formed in the inner facing walls of said guide rails, arranged to receive projecting support formations on the spreader. In such a configuration, the slot would be open at opposite ends for accommodating the spreader.

Referring to Figure 7, surface 118 is provided preferably with an indicator 140 located generally equidistant between rails 132 and 134 and adjacent one of the indentations 130. The indicator 140 designates the location for deposit thereon of the blood sample 113 upon the slide 114. Surface 118 also can be provided with a directional arrow 142. As illustrated in Figure 13 central recess 119 below the surface 118 is provided for hot stamping of arrow 142 and other artwork without disturbing the flatness of surface 118 on which the slide 114 is supported.

As illustrated in Figure 9, base 112 is provided with rigidifying means for the surface 118. Illustrative of such means is a plurality of elongate rib members 144 depending from surface 118 similar to ribs 44 described with reference to Figure 3. Additionally, base 112 can be provided with a pair of feet members 146 and 148 similar to feet 46 and 48 described with reference to Figures 1 and 3.

Spreader 116 preferably is fabricated by injection molding, for example, from crystal grade polystyrene which enables the spreader to be inexpensive and transparent. As illustrated in Figures 7, 9 and 10, spreader 116 includes a horizontal, planar platform 150 of generally rectangular configuration. The spreader has a pair of gripping members 152 upstanding from opposing sides of platform 150.

As best illustrated in Figures 7 and 9, a projection 154 having a generally cylindrical configuration extends laterally outward from each respective gripping member 152. Projections 154, which appear like pins or trunnions, are seated on the respective shoulders 132a and 134a and support the front end 156 of the platform 150 above the slide 114. Projections 154 have their axes generally parallel to and spaced above the plane of the platform 150. Thus supported, the front end 156 of the platform will not contact the slide 114. The shoulders 132a and 134a and projections 154 are selectively located at an elevation above the surface 118 and slide 114 so that the bottom edge 162 of the blade 158 is maintained in planar engagement with the slide 114, and platform 150 is horizontal during movement of the spreader. Only blade 158 rides on the slide 114 in the preparation of a smear, as best shown in Figures 8 and 9. Accordingly, the entire linear movement of spreader 116 across the slide 114 does not produce grooving in the support surface 118 of base 112 or interruption in the sample smear, even upon slides having a frosted end 114a.

Blade 158 includes an arcuate formation 164 which joins the bottom edge 162 and the platform 150. An arcuate edge 165 formed on the central portion of the rear end 160 of the platform 150 is molded to conform in curvature to the arcuate formation 164 of the blade in order to maintain uniformity of the curvature and thickness of formation 164 during molding of the spreader. Blade 158 is provided with a planar, recessed surface 166 which extends generally parallel to the platform 150 from the bottom edge 162 in the direction generally opposite to the front end 156. The recessed surface 166 provides a clearance space 167 between the blade member 158 and the slide 114 for the formation of a thin film or monolayer of the sample fluid as described hereinafter. The recessed surface 166 intersects a rearwardly inclined surface 168 which forms an angle of approimately 10 to 15 degrees above the horizontal recessed surface 166.

Referring to Figure 8, to use apparatus 110, a clean slide 114 first is placed on the bed surface 118 of the base 112 between the four positioning posts 120 and 122 so that the unfrosted end of the slide is positioned over the indicator 140. A spreader 116 is placed onto the center of the slide between the guide rails 132, 134 with the projections 154 seated on respective shoulders 132a and 134a. Blade 158 faces, but is spaced from, the indicator 140 as illustrated in the middle position A of the spreader 116 in Figure 8. A blood sample 113 of approimately 5 to 6 microliters is then deposited on the slide over the indicator 140 using a capillary tube. The spreader 116 is moved manually through the blood deposit with a substantial downward force on handles 152 until the blade 158 of the spreader engages the stop posts 122, as illustrated at the phantom position B of the spreader 116 in Figure 8. This downward force enables the blade 158 to displace all of the cells from the original location of the sample deposit; also, this initial motion initiates lateral distribution of the blood along the blade 158.

During a brief pause when the spreader 116 is engaged with the post 122, capillary action will spread the blood 113 laterally along the blade 158 so that the clearance spaces 167 between the slide 114 and the recessed surface 166 of the blade will become substantially filled, as best illustrated in Figure 10. Thereafter, the spreader 116 is moved forward on the slide in the direction indicated by arrow 142 until it engages the

0107372

posts 120 in the phantom position C illustrated in Figure 8. The thin, monocellular layer of blood is produced as an even trail behind the blade 158 in conformity with a preferred 0.0026 inch dimension of the clearance space 167. The rails 132 and 134 of the base 112 maintain the lateral alignment of the spreader 116 and the slide 114 in both the initial backward movement and the forward movement of the spreader on the slide 114. The self-lubrication in the composition of the base 112 promotes smooth traversal of projections 154 on the ramp or bearing formations provided by the shoulders 132a and 134a without excessive wear by reason of repeated use. Although projections 154 have been illustrated as cylindrical pins or trunnions in the preferred embodiment, this configuration is not to be considered exclusive. Thus, the projection 154 may have a slight flat at the point of engagement with the ramp or track. The bed surface 118 of the base is not subjected to grooving or deformation with repeated use.

CLAIMS

1. Apparatus for preparing a monolayer film of a biological fluid sample, such as blood or the like, on a slide for microscopic analysis, including a base for supporting the slide and a spreading device for spreading the sample upon the slide, characterized by:

A. a base having opposite extremities and a flat upper surface between said extremities for supporting a slide thereon and a pair of upstanding guide rails extending along opposite side edges of the surface;

B. a sample spreader for linear movement between said extremities relative to and engaged with the slide for spreading the sample into a monolayer on the slide comprising:

i. a generally planar platform having opposing first and second ends;

ii. one or more support members for supporting said first platform end above said slide without engagement of the support members with said surface;

iii. a sample spreading blade member depending from the platform adjacent said second end; and

C. said spreader being constructed and arranged to be positioned for such movement between the guide rails with said blade member riding on the slide so that when a sample has been deposited on the slide resting on said surface, said spreader is movable linearly to enable the blade member to form

-17-   0107372

said monolayer during such linear movement of the spreader between said extremities without engaging said surface.

2. The apparatus as claimed in claim 1, characterized in that said guide rails include elongated bearing formations arranged to support said sample spreader thereon during the linear movement of the spreader between said guide rails.

3. The apparatus as claimed in claim 2, characterized in that said bearing formations comprise longitudinally extending shoulders formed in said guide rails extending in a common plane parallel to and spaced above said surface.

4. The apparatus as claimed in claims 2 or 3, characterized in that said support members comprise trunnion formations extending laterally from respective sides of said spreader for engaging said bearing formations.

5. The apparatus as claimed in claim 4, characterized in that said trunnion formations include laterally protruding pins coaxially oriented relative to the spreader.

6. The apparatus as claimed in claim 4, characterized in that said shoulder formations are exposed below the top extremities of said guide rails to allow placement of said trunnion formations upon said shoulders.

0107372

7. The apparatus as claimed in claim 1 characterized in that said support members comprise a pair of spaced apart leg members depending from the platform adjacent said first end, both said leg members and blade member riding on the slide during the linear movement of the spreader.

8. The apparatus as claimed in claim 7 characterized in that each of said leg members is tapered at the bottom end thereof in order to reduce the area of engagement thereof with the slide during such linear movement.

9. The apparatus as claimed in claim 1 characterized in that said base includes at least one rigidifying member depending from said surface to prevent deformation of said surface under downward force exerted upon said spreader during said movement.

10. The apparatus as claimed in claim 9 characterized by a plurality of spaced apart rigidifying ribs depending from said surface and extending across the substantial part of the length of said face.

11. The apparatus as claimed in claim 1 characterized in that said guide rails are spaced apart selectively relative to the width of the spreader so as to maintain desired alignment of the spreader and the slide.

**FIG. 1**

**FIG. 2**

**FIG. 3**

2/3

0107372

FIG. 4

FIG. 5

FIG. 6

3/3

0107372

FIG. 7

FIG. 8

FIG. 9

FIG. 10

FIG. 11